# EUROPEAN PATENT SPECIFICATION

(11) **EP 3 245 878 B1**
(45) Date of publication and mention of the grant of the patent: **04.03.2020**
(21) Application number: 16737347.1
(22) Date of filing: 13.01.2016
(51) Int. Cl.: A23L 2/02, A23L 2/00, A23L 2/06, C12G 3/04, A23L 2/52, A23L 2/56, A23L 2/68

(54) **BEVERAGE CONTAINING FRUIT JUICE OF FLAVORFUL ACIDIC CITRUS FRUIT**
GETRÄNK MIT FRUCHTSAFT VON WOHLSCHMECKENDEN SAUREN ZITRUSFRÜCHTEN
BOISSON CONTENANT DU JUS DE FRUITS CONSTITUÉ D'AGRUMES ACIDES SAVOUREUX

(30) Priority: 16.01.2015 JP 2015007123
(43) Date of publication of application: 22.11.2017
(73) Proprietor: Suntory Holdings Limited, Kita-ku, Osaka-shi Osaka 530-8203 (JP)
(72) Inventor: ICHIMURA, Atsushi, Kawasaki-shi Kanagawa 211-0067 (JP); MIYAO, Yuki, Kawasaki-shi Kanagawa 211-0067 (JP); IBUSUKI, Daigo, Kawasaki-shi Kanagawa 211-0067 (JP)
(74) Representative: Vossius & Partner Patentanwälte Rechtsanwälte mbB
(86) International application number: PCT/JP2016/050761
(87) International publication number: WO 2016/114276

(56) References cited:
- WO-A1-2015/198871
- JP-A- H0 576 326
- JP-A- 2013 223 482
- JP-A- 2014 000 055
- JP-A- 2014 064 488
- JP-A- 2014 110 765
- US-A1- 2010 159 100
- US-A1- 2010 196 554
- 'Grapefruit Squash, cookpad', [Online] 09 July 2007, XP009504631 Retrieved from the Internet: <URL:HTTP://COOKPAD.COM/RECIPE/401440>> [retrieved on 2016-04-05]
- 'SAWAYAKA ORANGE LEMONADE' COOKPAD, [Online] 18 May 2015, pages 1 - 2, XP055465344 Retrieved from the Internet: <URL:HTTP://COOKPAD.COM/RECIPE/3168867> [retrieved on 2016-04-05]
- 'NON'ARU KIBUN CHICHUKAI LEMON' SUNTORY, [Online] 05 January 2012, pages 1 - 2, XP055465345 Retrieved from the Internet: <URL:HTTP://WWW.SUNTORY.CO.JP/NEWS/2012/112 75.HTML> [retrieved on 2016-04-07]

## Description

### TECHNICAL FIELD

The present invention relates to a beverage containing flavorful acidic citrus fruit juice, and more particularly to a beverage containing flavorful acidic citrus fruit juice, which makes one perceive a fresh sensation typical of citrus fruits and a flavor characteristic of each of different flavorful acidic citrus fruits.

### BACKGROUND ART

In general, flavorful acidic citrus fruits, such as lemon, lime, *Citrus junos, Citrus sphaerocarpa* and *Citrus depressa,* have a strongly acid and bitter pulp and so are rarely eaten raw. However, the juice and peel of these fruits are used for seasoning or flavoring dishes, since their unique refreshing aroma as well as acid and slightly bitter tastes coming from the vicinity of their peel are favored among people. Also, since flavorful acidic citrus fruits have their own unique flavor, various beverages are produced making use of their unique flavor -- for example, lemon-flavored soft drinks, and shochu-based beverages made with lime or *Citrus junos.*

When packaged beverages are produced using a fruit juice, the juice has to be sterilized by heat from the viewpoints of keeping quality and hygiene. However, the fresh aroma and flavor inherent in freshly extracted fruit juice are reduced by heat sterilization or during subsequent storage. For the purpose of making up for the reduced flavor, a fruit flavorant or fruit flavoring is added to beverages. Further, flavorful acidic citrus fruit juices generally have too strong an acid and bitter taste to drink as it is; so, when beverages are produced making use of the flavor of flavorful acidic citrus fruits, a flavorant or flavoring is added to the beverages to make up for the deficiency in the unique flavor of flavorful acidic citrus fruits due to a low content of fruit juice. For example, Patent Literature 1 discloses that flavorful acidic citrus fruit-like flavor can be enhanced by adding 4-mercapto-4-methyl-2-pentanone to an essential peel oil of a flavorful acidic citrus fruit. Patent Literature 2 teaches to adjust the amount of narirutin in a carbonated fruit juice beverage to a specific absolute range, wherein the fruit juice is orange, mandarin, lemon, grapefruit, lime, mandarin, citron, Citrus depressa, tangerine, temple orange or tangelo juice.

### CITATION LIST

### PATENT LITERATURE

Patent Literature 1: Japanese Patent Application Publication No. JP 2010-88348
Patent Literature 2: Japanese Patent Application Publication No. JP2013-223482

### SUMMARY OF INVENTION

### TECHNICAL PROBLEM

As mentioned above, when a beverage with a flavorful acidic citrus fruit flavor is produced using a flavorful acidic citrus fruit juice, the flavorful acidic citrus fruit flavor is reproduced by adding a flavorant or flavoring. However, it was known that there is a problem with this approach because beverages produced simply by adding a conventional flavorant or flavoring to a small amount of fruit juice hardly give a perception of so-called "natural fruit-like qualities", such as fruit's fresh sensation, robust flavor, and fruit peel odor. It was also known that another problem is that when the fruit juice content is increased, the acid taste unique to flavorful acidic citrus fruits becomes so strong that the produced beverage is uncomfortable to drink. The present invention has as its object to produce a not-too-acidic and easy-to-drink beverage with authentic flavorful acidic citrus fruit-like qualities, which makes one perceive a sensation of fruit freshness and a characteristic flavor of flavorful acidic citrus fruits.

### SOLUTION TO PROBLEM

The present inventors have made intensive studies to solve the aforementioned problems, and as a result, found that when a particular group of flavonoids (naringin, hesperidin, eriocitrin, narirutin, neohesperidin, and rutin) abundant in flavorful acidic citrus fruit peel are incorporated in a flavorful acidic citrus fruit juice-containing beverage having a low level of fruit juice content which is in the range of 1 to 30%, so as to ensure that the relative ratio of the amount of narirutin, one of those flavonoids, with respect to the total amount of those flavonoids falls within the particular range, there can be produced a beverage characterized in that flavorful acidic citrus fruit juice's unique acid taste which makes the beverage uncomfortable to drink is reduced while flavorful acidic citrus fruit-like qualities are maintained. The present invention includes, but is not limited to, the following.
[1] A flavorful acidic citrus fruit juice-containing beverage having a ratio of the amount of narirutin to the total amount of naringin, hesperidin, eriocitrin, narirutin, neohesperidin, and rutin, which is in the range of 0.06 to 0.14, and the beverage having a fruit juice content of not less than 1% and not more than 30%, and wherein the flavorful acidic citrus fruit(s) is/ are selected from the group consisting of yuzu (Citrus iunos), lemon (Citrus limon), lime (Citrus aurantiifolia), Citrus depressa, kabosu (Citrus sphaerocarpa) and sudachi (Citrus sudachi).
[2] The beverage as set forth in [1], comprising orange juice.
[3] The beverage as set forth in [1] or [2], wherein the total amount of naringin, hesperidin, eriocitrin, narirutin, neohesperidin, and rutin is in the range of 40 to 500 mg/kg of the beverage.
[4] The beverage as set forth in any one of [1] to [3], whererin the ratio of the amount of eriocitrin to the total amount of naringin, hesperidin, eriocitrin, narirutin, neohesperidin, and rutin is in the range of 0.15 to 0.40.
[5] The beverage as set forth in any one of [1] to [4], wherein the proportion of a flavorful acidic citrus fruit juice content with respect to the total content of all fruit juices in the beverage is not less than 20%.
[6] The beverage as set forth in any one of [1] to [5], wherein the beverage is a packaged beverage.

### ADVANTAGEOUS EFFECTS OF INVENTION

According to the present invention, there is produced a beverage with flavorful acidic citrus fruit-like qualities, which is not too acidic and easy to drink while having a characteristic flavor of flavorful acidic citrus fruits. Naringin, hesperidin, eriocitrin, narirutin, neohesperidin, and rutin are flavonoids particularly abundant in the vicinity of citrus fruit peel, and many of them have a slight bitterness as perceived from citrus fruit peel. Since the beverage of the present invention comprises at least two or more of these components, the inventive beverage gives a sense of fruit peel, which is a characteristic flavor of citrus fruit peel. The sense of citrus fruit peel is also called a sense of peel or a peel-like sensation, and gives beverages a refreshing and fresh impression as perceived when a citrus fruit is peeled. Also, as evident from the fact that the peels of flavorful acidic citrus fruits are commonly used for cooking and other purposes, the flavorful acidic citrus fruit peels have a flavor characteristic of each of different flavorful acidic citrus fruits; so, flavorful acidic citrus fruit-like qualities can be improved by enhancing a sense of fruit peel. Among the aforementioned flavonoids, narirutin is a component with low bitterness which is found in citrus fruits like orange. The beverage of this invention is characterized in that a bitter taste coming from citrus fruit peel is moderately reduced by incorporating narirutin at a particular ratio with respect to the total amount of the aforementioned flavonoids, and the flavor of narirutin suppresses an acid taste and makes the beverage easy to drink. Incidentally, when the juice of a flavorful acidic citrus fruit such as lemon, *Citrus junos,* lime, or *Citrus sphaerocarpa* is simply used independently (*e.g.,* after diluted as appropriate) in a beverage, the flavonoid ratio of this invention is not satisfied. In order to satisfy the flavonoid ratio of this invention, it is necessary, for example, to incorporate a combination of different types of fruit juices -- *e.g.,* incorporate a flavorful acidic citrus fruit juice in admixture with a narirutin-rich fruit juice -- or to add components such as flavorings containing the aforementioned flavonoids while adjusting their amounts to satisfy the flavonoid ratio of this invention. The present inventors measured the contents of the aforementioned flavonoids in different types of flavorful acidic citrus fruit juice-containing beverages commercially available at the time of the filing of the present application, but no beverage satisfied the particular range of flavonoid ratio of this invention.

### DESCRIPTION OF EMBODIMENTS

### (Citrus flavonoids)

The beverage of the present invention is a flavorful acidic citrus fruit juice-containing beverage characterized in that the ratio of the amount of narirutin to the total amount of naringin, hesperidin, eriocitrin, narirutin, neohesperidin, and rutin (which are also to be hereinafter collectively referred to as "citrus flavonoids") (said total amount is to be hereinafter referred to as "total citrus flavonoid amount") (namely, said ratio is briefly expressed as a ratio of "narirutin amount/total citrus flavonoid amount") is in the range of 0.06 to 0.14.

Naringin, hesperidin, eriocitrin, narirutin, neohesperidin, and rutin are all components with a flavonoid backbone which are found in citrus fruits. Naringin is known as a bitterness component characteristic of grapefruit, and is detected in almost all parts of grapefruit, such as peel, pulp, and segment membrane. Naringin is also found in the vicinity of the peels of *Citrus junos, Citrus sudachi* and *Citrus sphaerocarpa.* Hesperidin is a component detected in many citrus fruits other than grapefruit, such as lemon, orange, *Citrus unshiu, Citrus junos,* lime, *Citrus reticulata* var *poonensis, Citrus hassaku,* kumquat and *Citrus depressa.* Eriocitrin is known as a component detected in many citrus fruits, such as lemon, orange, grapefruit, *Citrus unshiu, Citrus junos,* lime and *Citrus reticulata* var *poonensis,* and having high antioxidative potency. Narirutin is a component detected in many citrus fruits, such as lemon, orange, grapefruit, *Citrus unshiu, Citrus junos,* lime and *Citrus reticulata* var *poonensis,* and having low bitterness relative to other citrus flavonoids. Neohesperidin is a component detected in many citrus fruits other than lemon, such as grapefruit, orange, *Citrus junos, Citrus sudachi, Citrus sphaerocarpa* and lime. Rutin is a compound that is found in some flavorful acidic citrus fruits, such as *Citrus sudachi, Citrus sphaerocarpa* and lime, and is also present in small amounts in grapefruit and *Citrus hassaku.*

In the present invention, the ratio of the amount of narirutin to the total amount of naringin, hesperidin, eriocitrin, narirutin, neohesperidin, and rutin ("total citrus flavonoid amount"), as found in a beverage, is in the range of 0.06 to 0.14. When the ratio of narirutin to citrus flavonoids in a beverage falls within the aforementioned range, there can be provided a beverage that is not too acidic or bitter and easy to drink while having flavorful acidic citrus fruit-like qualities. This ratio is preferably in the range of 0.06 to 0.10.

The total citrus flavonoid amount is preferably in the range of 40 to 500 mg/kg, more preferably 40 to 200 mg/kg. It is preferable that the total citrus flavonoid amount be in the aforementioned range, since citrus fruit-like qualities are adequately imparted to a beverage. In consideration of a well-balanced flavor typical of flavorful acidic citrus fruits, the amount of narirutin is preferably in the range of 2 to 70 mg/kg, more preferably 4 to 21 mg/kg.

Further, it is preferable that the ratio of the amount of eriocitrin to the total citrus flavonoid amount be in the range of 0.15 to 0.40, since both a well-balanced flavor typical of citrus fruits and the inhibitory effect of eriocitrin's antioxidant potency on deterioration of a flavor component can be obtained. This ratio is more preferably in the range of 0.20 to 0.35.

Also, it is preferable that the ratio of the amount of naringin to the total citrus flavonoid amount be in the range of 0.10 to 0.50, since a slightly bitter taste characteristic of flavorful acidic citrus fruits is reproduced in a well-balanced manner, thereby leading to an improvement of the beverage in terms of flavorful acidic citrus fruit-like qualities. This ratio is more preferably in the range of 0.06 to 0.10.

The amount of naringin is preferably in the range of 4 to 70 mg/kg, more preferably 6 to 50 mg/kg. The amount of hesperidin is preferably in the range of 10 to 200 mg/kg. The amount of eriocitrin is preferably in the range of 5 to 150 mg/kg. The amount of neohesperidin is preferably in the range of 0 to 5 mg/kg. The amount of rutin is preferably in the range of 0 to 5 mg/kg. When the amounts of these components fall within the aforementioned ranges, there can be produced a beverage having a well-balanced citrus flavor on the whole.

Adjustment to the amounts of these citrus flavonoids included in a beverage can be made by appropriately adjusting the amounts of flavors or naturally occurring materials containing those flavonoids. In particular, in consideration of natural fruit-like qualities of a beverage, it is preferable to adjust the citrus flavonoid amounts by using one or two or more of fruit juices of various species of fruits in combination with a flavorful acidic citrus fruit juice. For example, when a citrus fruit juice like orange juice or grapefruit juice is mixed in appropriate amounts with a flavorful acidic citrus fruit juice, the citrus flavonoid amounts and their ratios as mentioned above can be adjusted to be in the ranges specified above. The contents of different flavonoids in citrus fruits are reported in, for example, Nogata Y., "Studies on Biologically Active Compounds in Citrus Fruits and Their Effective Utilization", Bulletin of NARO Western Region Agricultural Research Center, 2005, No.5. By making reference to such a material, the types of fruit juices to be used can be selected or examined. The amounts of flavonoids in a beverage can be measured using a known method such as high-performance liquid chromatography-mass spectroscopy (LC-MS). For example, the amounts of flavonoids present in a beverage can be measured under the conditions detailed below.

### <Analysis of flavonoids>

The following describes a method for analyzing the amounts of flavonoids by LC-MS.

### (1) Sample preparation

In the case of using a beverage solution containing carbon dioxide, carbon dioxide is degassed by a conventional method. First, 10 g of the beverage solution is weighed out in a centrifuge tube (A). The beverage sample is weighed out in an amount of 5 g if it has a Brix of not less than 20°Bx, or 2 g if it has a Brix of not less than 40°Bx, and the sample is diluted to a volume of 10 mL with distilled water for liquid chromatography. After 20 mL of ethanol for liquid chromatography is added, the contents are mixed vigorously on a vortex mixer for at least one minute. If the contents are too viscous to be miscible, the tube is vigorously shaken by hand or the like depending on the need. The tube is spun on a centrifuge (at 3000 xg for 30 min. at 20°C), and the supernatant is transferred to a different centrifuge tube (B). After 20 mL of ethanol for liquid chromatography is added to the precipitate and the solids are fully broken down using a dispensing spoon or the like, the contents are vigorously mixed on a vortex mixer for at least one minute. The tube is centrifuged with a centrifuge (at 3000 xg for 30 min. at 20°C), and the supernatant is added to the centrifuge tube (B). The supernatant collected in the centrifuge tube (B) is further centrifuged (at 3000 xg for 30 min. at 20°C), and the resulting supernatant is transferred to a 50 mL volumetric flask and diluted with ethanol. The well-mixed supernatant solution is filtered through a PTFE filter (produced by Toyo Roshi Kaisha, Ltd.; ADVANTEC DISMIC-25HP 25HP020AN; pore size 0.20 µm; diameter 25 mm) which has been washed beforehand with ethanol, and the filtrate is used as an analysis sample.

### (2) LC analysis conditions

HPLC system: Nexera XR Series (produced by Shimadzu Corporation; equipped with a system controller CBM-20A, a feed pump LC-20ADXR, an online degassing unit DGU-20A3, an autosampler SIL-20ACXR, a column oven CTO-20A, and a UV/VIS detector SPD-20A)
   Column: CAPCELL CORE AQ (grain size 2.7 µm; 2.1 mm I.D. × 150 mm; produced by Shiseido)
   Mobile phase A: 0.1% formic acid in water
   Mobile phase B: Acetonitrile
   Flow rate: 0.6 mL/min.
   Concentration gradient condition: 0.0 to 0.5 min. (15% B) → 6.0 min. (25% B) → 10.0 min. (75% B) → 10.1 to 11.0 min. (100% B), followed by equilibration for 3.0 min. with an initial mobile phase.
   Column temperature: 40°C
   Sample injection: Injection volume 2.0 µL
   Sample introduction into mass spectrometer: 1.8 to 11.0 min.

### (3) Mass spectroscopy conditions

Mass spectrometer: 4000 Q TRAP (produced by AB Sciex)
[Analysis conditions 1] -- For naringin, hesperidin, eriocitrin, narirutin, and neohesperidin. The analysis of rutin must be conducted separately according to the analysis conditions 2.
   Ionization mode: ESI (Turbo Spray), negative mode
   Ionizer conditions: CUR: 10, IS: -4500, TEM: 650, GS1: 80, GS2: 60, ihe: ON, CAD: Medium
   Detection mode: MRM mode
   Detection conditions (Ql → Q3, DP, CE, CXP, EP):
      Eriocitrin (595.2 → 287.1, -76, -50, -11, -10)
      Narirutin and naringin (579.2 → 271.1, -85, -42, -9, -10)
      Hesperidin and neohesperidin (609.2 → 301.1, -76, -50, -11, -10)
   Peak detection time: Substantially as follows, although confirmation using a standard specimen is needed:
      Eriocitrin (2.74 min.), narirutin (4.14 min.), naringin (4.50 min.), hesperidin (5.16 min.), neohesperidin (5.68 min.).
[Analysis conditions 2] -- For rutin. This analysis must be conducted separately from the analysis made under the conditions 1.
   Ionization mode: ESI (Turbo Spray), positive mode
   Ionizer conditions: CUR: 10, IS: 5500, TEM: 650, GS1: 80, GS2: 60, ihe: ON, CAD: Medium
   Detection mode: MRM mode
   Detection conditions (Q1 → Q3, DP, CE, CXP, EP):
      Rutin (611.2 → 303.1, 76, 25, 12, 10)
   Peak detection time: Substantially as follows, although confirmation using a standard specimen is needed:
      Rutin (3.01 min.).

### (4) Quantification

Three or more different concentrations of standard specimen solutions are provided, and analyte concentrations are quantified by an absolute calibration curve method based on the obtained peak areas.

### (Fruit juice content)

The beverage of the present invention has a fruit juice content of not less than 1% and not more than 30%. As referred to above, the "fruit juice content" refers to the relative concentration of a fruit juice with respect to a straight fruit juice obtained by squeezing a fruit, which is taken as 100%. For example, the fruit juice content can be calculated based on the criteria (given below) of sugar refractometer reading or acidity for different straight fruit juices as defined in the JAS (Japanese agricultural standard for fruit beverages):
(Criteria of sugar refractometer reading (°Bx))
   - Orange (*Citrus sinensis*), *Citrus reticulata var poonensis*: 11
   - *Citrus hassaku, Citrus iyo*: 10
   - *Citrus unshiu,* grapefruit, *Citrus natsudaidai*: 9
   - *Citrus depressa*: 8
(Criteria of acidity (in terms of citric acid) (%))
   - Lemon: 4.5
   - Lime: 6

For example, the criterion of acidity for lemon juice according to the JAS is 4.5% in terms of citric acid; so, if 6% by weight of a concentrated lemon juice with an acidity of 22.5% is incorporated in a beverage, it will then follow that the fruit juice content of the beverage is 30%. Likewise, as for other fruits not listed above, the fruit juice content can be calculated by determining the relative concentration of a fruit juice with respect to a straight fruit juice which is taken as 100%. For example, if 5% by weight of a 200% concentrated fruit juice is used in a beverage, it will then follow that the fruit juice content of the beverage is 10%.

If different types of fruit juices are used in the beverage of the present invention, the fruit juice content is determined by totaling the respective fruit juice contents calculated for all the types of fruits according to the aforementioned procedure. Additionally, it should be noted that the thus-calculated fruit juice content generally corresponds to the percentage of fruit juice as indicated in a package of a fruit juice-containing beverage (*i.e.,* a value indicated as "n% fruit juice").

The beverage of the present invention has a fruit juice content of not less than 1% and not more than 30%, preferably not less than 1% and not more than 20%, more preferably not less than 3% and not more than 20%. By satisfying the fruit juice content and citrus flavonoid ratio mentioned above, the beverage of this invention can make one perceive a characteristic flavor of flavorful acidic citrus fruit peel and at the same time have a reduced acid taste. It is known that fruit juices, in particular citrus fruit juices, are easily deteriorated by heating or during storage to produce a peculiar flavor. However, there is an advantage in that when a beverage has a fruit juice content as low as 1 to 30%, the beverage makes one relatively less perceive a peculiar flavor generated by deterioration of fruit juice.

### (Fruit juice)

The beverage of the present invention comprises at least a flavorful acidic citrus fruit juice from fruit selected from yuzu (Citrus junos), lemon (Citrus limon), lime (Citrus aurantiifolia), Citrus depressa, kabosu (Citrus sphaerocarpa),and sudachi (Citrus sudachi). Flavorful acidic citrus fruits are a generic name for citrus fruits that are strongly acid and unfit for eating raw, unlike common citrus fruits, but whose aroma and acid taste are utilized for various purposes (*Hana Zukan* -- *Yasai* + *Kudamono (*Flower Guide -- Vegetables & Fruits), 2nd printing published on June 25, 2009, supervised by Serizawa M., et al., pub. by Sodo Publishing Co., Ltd.).

In the present invention, the total fruit juice content of the beverage containing a flavorful acidic citrus fruit juice is not less than 1% and not more than 30%, preferably not less than 1% and not more than 20%. If the content of flavorful acidic citrus fruit juice is less than 1%, the beverage may be deficient in flavorful acidic citrus fruit-like qualities. If the content of flavorful acidic citrus fruit juice is more than 30%, the beverage may be unfit for drinking since the acid and bitter tastes of flavorful acidic citrus fruit juice are too strong.

The beverage of the present invention comprises at least a flavorful acidic citrus fruit juice, but may further comprise any other fruit juices in addition to the flavorful acidic citrus fruit juice. For example, as mentioned above, a flavorful acidic citrus fruit juice may be combined in appropriate amounts with any other citrus fruit juice like grapefruit or orange juice to thereby adjust the amounts of citrus flavonoids. Examples of other fruit juices than flavorful acidic citrus fruit juices include, but are not limited to, apple juice, grape juice, peach juice, strawberry juice, banana juice, cherry juice, melon juice, watermelon juice, mango juice, papaya juice, kiwi fruit juice, Japanese pear juice, European pear juice, persimmon juice, Japanese apricot juice, muscat juice, pineapple juice, passion fruit juice, guava juice, apricot juice, plum juice, cranberry juice, and pomegranate juice. In particular, it is preferable to use a flavorful acidic citrus fruit juice in combination with one or two or more of citrus fruit juices containing some or all of the aforementioned flavonoids, such as grapefruit juice, orange juice, *Citrus unshiu* juice, and mandarin juice. Especially, it is preferable to adjust the citrus flavonoid amounts to be in the aforementioned ranges by combining a flavorful acidic citrus fruit juice with orange juice, since there can be produced a beverage that makes one perceive not only flavorful acidic citrus fruit-like qualities but also not-too-strong bitterness. When a flavorful acidic citrus fruit juice and any other fruit juices are used in combination, it is preferred that the percentage of the flavorful acidic citrus fruit juice content with respect to the total fruit juice content be not less than 20%, more preferably not less than 25%. The upper limit of this percentage is not particularly limited. In this regard, one of the characteristics of the inventive beverage is that even when the percentage of the flavorful acidic citrus fruit juice content with respect to the total fruit juice content is, for example, as low as not more than 60% (namely, even when a flavorful acidic citrus fruit juice is used only in a relatively small proportion), the beverage can surprisingly make one perceive the flavor of a flavorful acidic citrus fruit. Therefore, beverages whose percentage of the flavorful acidic citrus fruit juice content with respect to the total fruit juice content is not less than 20% and not more than 60%, or not less than 25% and not more than 60% may well be said as one of the preferred modes of the present invention.

Any types of fruit juices, such as straight fruit juice or concentrated fruit juice, can be used regardless of their production method. In consideration of ease of handling, a from-concentrate juice is preferred.

### (Beverage)

The beverage of the present invention is a beverage having so-called "flavorful acidic citrus fruit-like qualities". The beverage having "flavorful acidic citrus fruit-like qualities" refers to beverages in general which remind consumers of flavorful acidic citrus fruits. The beverage of this invention is, in particular, a beverage that makes one perceive a refreshing and fresh sensation typical of flavorful acidic citrus fruits, as perceived when a flavorful acidic citrus fruit is peeled, or in other words is a so-called flavorful acidic citrus fruit-flavored beverage. The beverage of this invention, when provided as a packaged beverage, preferably has a representation reminiscent of a flavorful acidic citrus fruit (e.g., a word or image of "lemon" or *"Citrus junos"*) being placed on the exterior of its package.

The beverage of the present invention may have added thereto various additives which are commonly added to beverages, such as sugar, sweetener, acidulant, vitamin, coloring agent, antioxidant, emulsifier, preservative, seasoning, extract, pH adjustor, and quality stabilizer, as long as the aforementioned characteristics -- flavorful acidic citrus fruit-like qualities -- are not impaired. For example, in consideration of the balance of sweet and acid tastes typical of citrus fruits, the sweet and acid tastes of the beverage may be adjusted by adding a sugar, sweetener, acidulant and/or the like to the beverage as appropriate. The sugar/acid ratio of the beverage is, for example, preferred to be approximately in the range of 10 to 40, and in consideration of ease of drinking, said ratio is more preferred to be approximately in the range of 15 to 30. As known to those skilled in the art, the sugar/acid ratio of a beverage can be determined by calculating the ratio of a sugar refractometer reading (°Bx) to acidity (in terms of citric anhydride) (%). Further, a citrus fruit flavorant or extract or a citrus fruit pulp or peel may be added to the beverage.

The beverage of the present invention may also be a carbonated beverage. The refreshing sensation of carbon dioxide goes well with the refreshing flavor of a flavorful acidic citrus fruit, and carbon dioxide makes it easy to perceive the aroma of a beverage; thus, carbonated beverages are one of the preferred modes of this invention. When the beverage of this invention is provided as a carbonated beverage, the carbon dioxide pressure is preferably in the range of 1 to 3.8 kgf/cm², more preferably in the range of 1.2 to 2.4 kgf/cm². The carbon dioxide pressure can be measured using the gas volume analyzer GVA-500A produced by Kyoto Electronics Manufacturing Co., Ltd. For example, after a sample is brought to a temperature of 20°C, the bottle is degassed (snifted) and shaken in the aforementioned gas volume analyzer, and then the carbon dioxide pressure is measured.

The form of the beverage of the present invention is not particularly limited, but is preferably a packaged beverage. For example, the beverage of this invention can be provided in the form of a packaged beverage through taking various steps including sterilization, packaging and sealing. A sterilization method can be determined depending on the types of a package and a beverage. For example, depending on the type of a package, heat sterilization such as retort sterilization may be performed after a beverage is filled into a package, or a beverage may be filled into a package after the beverage is sterilized. More specifically, when the beverage of this invention is provided as a PET bottled beverage, a paper packed beverage, a glass bottled beverage, or a pouched beverage, FP or UHT sterilization which involves holding a beverage, for example, at 90 to 130°C for 1 to 60 seconds can be conducted. When the beverage of this invention is provided as a beverage packed in a metal container such as a can, sterilization (*e.g.,* at 65°C for 10 min) can be conducted after a specified amount of the beverage composition of this invention is filled into a package. When the beverage composition of this invention is provided as a packaged beverage, either of a hot pack filling method and an aseptic filling method can be used. The beverage of this invention is further advantageous in that, since the inventive beverage has a relatively low fruit juice content, the beverage hardly produces a peculiar flavor and can maintain the fresh flavor of citrus fruits even when sterilized by heat.

In one mode, the beverage of the present invention may also be a beverage packed in a BIB (bag-in-box) package. The BIB package is a container for liquid storage which is composed of an interior package and an exterior package. Generally, the interior package is made of plastic, and the exterior package is primarily formed with a cardboard case. The interior package used in the BIB package may be of a molded type or a film type -- the type of the interior package is not particularly limited. The volume of the BIB package is not particularly limited, and is for example in the range of 1 to 2000 L, preferably 2 to 20 L. BIB packages aimed at general customers have a volume of, for example, about 1 to 5 L, and those for business purposes have a volume of, for example, about 10 to 1000 L. When the beverage of this invention is provided as a packaged beverage, the fruit juice content of the beverage upon packaging is regarded as the fruit juice container of the inventive beverage.

In another mode, the beverage of the present invention may also be a beverage obtained by diluting a liquid concentrate used as a source material. The thus-obtained beverage can be provided by pouring it into a container such as cup. Dilution of a liquid concentrate can be carried out by adding water (including drinkable water), carbonated water, or the like and mixing it with the liquid concentrate. This form of beverage can be provided in the food service industry such as restaurants, fast food restaurants, coffee shops, and cafeterias, but the place of providing the beverage is not particularly limited. When the beverage of this invention is provided in such a form, the fruit juice content of the beverage obtained after a liquid concentrate used as a source material is diluted corresponds to the fruit juice content of the inventive beverage.

Hereunder, the present invention will be described by way of working examples, but this invention is not limited to these examples.

### EXAMPLES

Lemon juice was used as a flavorful acidic citrus fruit juice. Different beverages of Comparative Examples 1 to 4 and Examples 1 to 13 as detailed below in Table 1 were prepared by changing the amounts of lemon juice, orange juice, grapefruit juice and water as appropriate, and the beverages were heat sterilized and packed in PET bottles. Also provided as Comparative Examples 5 to 8 were four different commercial citrus fruit-flavored beverages. Among them, Comparative Examples 5 and 6 were carbonated beverages labeled as lemon, Comparative Example 7 was a non-carbonated beverage labeled as grapefruit, and Comparative Example 8 was a carbonated beverage labeled as orange.

The different beverages were measured for their flavonoid amounts (mg/kg). The beverages were also subjected to sensory evaluation by six panelists using a 5-point rating scale, to determine their sense of lemon (*i.e.,* whether they are reminiscent of lemon), fresh sensation (*i.e.,* whether they can make one perceive a fresh aroma as perceived when a citrus fruit is peeled), acidity (*i.e.,* whether the acid taste of the beverages can be perceived), bitterness (*i.e.,* whether the bitter taste of the beverages can be perceived), and degree of pleasantness (*i.e.,* whether they can be consumed pleasantly as beverages). The evaluation on sense of lemon, fresh sensation, acidity and bitterness was conducted based on the following criteria: 1 "not perceived at all"; 2 "hardly perceived"; 3 "perceived"; 4 "fairly perceived"; and 5 "strongly perceived". The evaluation on degree of pleasantness was conducted based on the following criteria: 1 "unpleasant"; 2 "not much pleasant"; 3 "neither pleasant nor unpleasant"; 4 "pleasant"; and 5 "very pleasant". The averages of the evaluation results obtained by the six panelists are also shown in Table 1.

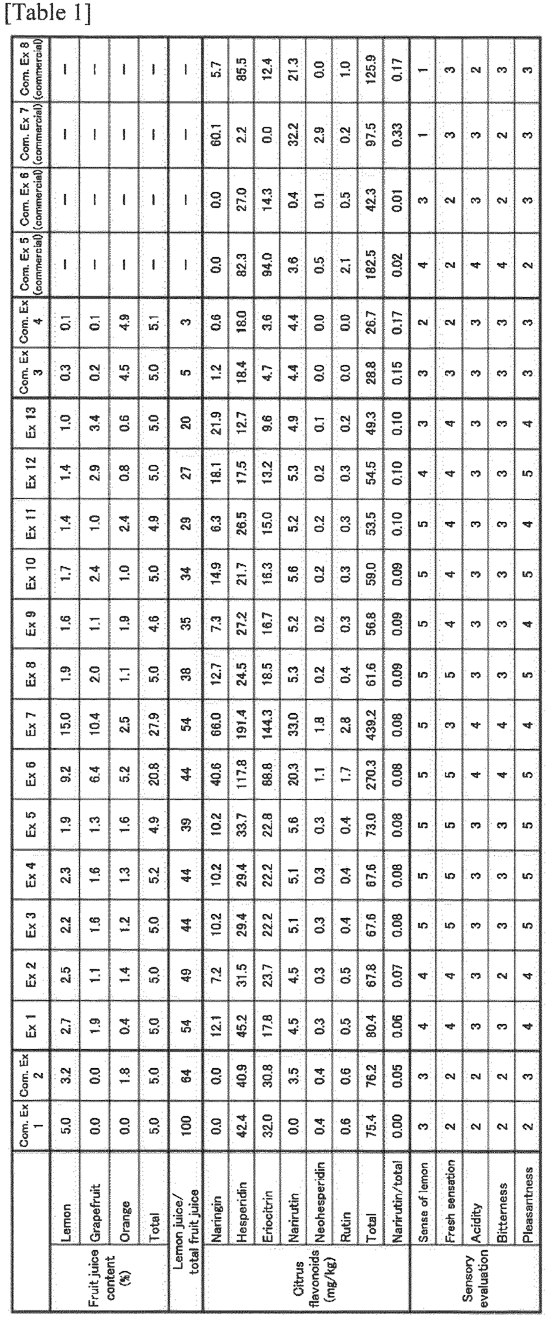

The results shown in Table 1 revealed that the beverages whose ratio of the amount of narirutin to the total citrus flavonoid amount was in the range of 0.06 to 0.14 were superior in sense of lemon and fresh sensation, made one perceive a moderate level of acidity and bitterness, and also had a high degree of pleasantness. It was a surprise that as compared to the beverages of Comparative Examples 1 and 2, the beverages produced according to Examples 1 to 12 showed a lower proportion of lemon juice content with respect to the total fruit juice content but gave a higher sense of lemon.

As compared to the commercial lemon carbonated beverages (Comparative Examples 1, 2) (both packages bore a word or image reminiscent of lemon in their product names or labels), the beverages of the present invention (Examples 1 to 13) had a comparable or higher sense of lemon and, in particular, gave a higher fresh sensation and had a higher degree of pleasantness.

## Claims

1. A flavorful acidic citrus fruit juice-containing beverage having a ratio of the amount of narirutin to the total amount of naringin, hesperidin, eriocitrin, narirutin, neohesperidin, and rutin, which is in the range of 0.06 to 0.14, and the beverage having a fruit juice content of not less than 1% and not more than 30%, and wherein the flavorful acidic citrus fruit(s) is/are selected from the group consisting of yuzu (Citrus junos), lemon (Citrus limon), lime (Citrus aurantiifolia), Citrus depressa, kabosu (Citrus sphaerocarpa) and sudachi (Citrus sudachi).

2. The beverage according to claim 1, comprising orange juice.

3. The beverage according to claim 1 or 2, wherein the total amount of naringin, hesperidin, eriocitrin, narirutin, neohesperidin, and rutin is in the range of 40 to 500 mg/kg of the beverage.

4. The beverage according to any one of claims 1 to 3, whererin the ratio of the amount of eriocitrin to the total amount of naringin, hesperidin, eriocitrin, narirutin, neohesperidin, and rutin is in the range of 0.15 to 0.40.

5. The beverage according to any one of claims 1 to 4, wherein the proportion of a flavorful acidic citrus fruit juice content with respect to the total content of all fruit juices in the beverage is not less than 20%.

6. The beverage according to any one of claims 1 to 5, wherein the beverage is a packaged beverage.

## Patentansprüche

1. Ein Getränk mit wohlschmeckendem saurem Zitrusfruchtsaft, das ein Verhältnis der Menge an Narirutin zur Gesamtmenge an Naringin, Hesperidin, Eriocitrin, Narirutin, Neohesperidin und Rutin, im Bereich von 0,06 bis 0,14 aufweist, und wobei das Getränk einen Fruchtsaftgehalt von nicht weniger als 1% und nicht mehr als 30% aufweist, und wobei die wohlschmeckende(n) saure(n) Zitrusfrucht/Zitrusfrüchte aus der Gruppe bestehend aus Yuzu (Citrus junos), Zitrone (Citrus limon), Limette (Citrus aurantiifolia), Citrus depressa, Kabosu (Citrus sphaerocarpa) und Sudachi (Citrus sudachi) ausgewählt ist/sind.

2. Das Getränk gemäß Anspruch 1, umfassend Orangensaft.

3. Das Getränk gemäß Anspruch 1 oder 2, wobei die Gesamtmenge an Naringin, Hesperidin, Eriocitrin, Narirutin, Neohesperidin und Rutin im Bereich von 40 bis 500 mg/kg des Getränks liegen.

4. Das Getränk gemäß einem der Ansprüche 1 bis 3, wobei das Verhältnis der Menge an Eriocitrin zur Gesamtmenge an Naringin, Hesperidin, Eriocitrin, Narirutin, Neohesperidin und Rutin im Bereich von 0,15 bis 0,40 liegt.

5. Das Getränk gemäß einem der Ansprüche 1 bis 4, wobei der Anteil an wohlschmeckendem saurem Zitrusfruchtsaftgehalt in Bezug auf den Gesamtgehalt aller Fruchtsäfte in dem Getränk nicht weniger als 20% beträgt.

6. Das Getränk gemäß einem der Ansprüche 1 bis 5, wobei das Getränk ein abgepacktes Getränk ist.

## Revendications

1. Boisson contenant du jus de fruits constitué d'agrumes acides savoureux, présentant un rapport de la quantité de narirutine, sur la quantité totale de naringine, d'hespéridine, ériocitrine, de narirutine, de néohespéridine, et de rutine, qui est compris entre 0,06 et 0,14, la boisson présentant une teneur en jus de fruit supérieure à 1 % et inférieure à 30 %, et où les agrumes acides savoureux sont sélectionnés dans le groupe constitué par le yuzu (Citrus junos), le citron (Citrus limon), le citron vert (Citrus aurantiifolia), le Citrus depressa, le kabosu (Citrus sphaerocarpa) et le sudachi (Citrus sudachi).

2. Boisson selon la revendication 1, comprenant du jus d'orange.

3. Boisson selon la revendication 1 ou 2, où la quantité totale de naringine, d'hespéridine, d'ériocitrine, de narirutine, de néohespéridine, et de rutine, est comprise entre 40 et 500 mg / kg de la boisson.

4. Boisson selon l'une quelconque des revendications 1 à 3, où le rapport de la quantité d'ériocitrine, sur la quantité totale de naringine, d'hespéridine, d'ériocitrine, de narirutine, de néohespéridine, et de rutine, est compris entre 0,15 et 0,40.

5. Boisson selon l'une quelconque des revendications 1 à 4, où la proportion de la teneur en jus de fruits contenant des agrumes acides savoureux, par rapport à la teneur totale de tous les jus de fruits dans la boisson, n'est pas inférieure à 20 %.

6. Boisson selon l'une quelconque des revendications 1 à 5, où la boisson est une boisson emballée.
